# EUROPEAN PATENT APPLICATION

(11) **EP 4 265 983 A1**
(43) Date of publication of application: **25.10.2023**
(21) Application number: 23167848.3
(22) Date of filing: 13.04.2023
(51) Int. Cl.: F25B 40/02, F25B 41/40, F25B 47/02, F25B 49/00, B60H 1/32, B60H 1/00, F25B 29/00

(54) **REFRIGERATION SYSTEM, CONTROL METHOD THEREOF AND TRANSPORT VEHICLE**

(30) Priority: 18.04.2022 CN 202210404273
(71) Applicant: Carrier Corporation, Palm Beach Gardens, FL 33418 (US)
(72) Inventor: XIE, Kangshan, Shanghai, 201206 (CN); CHEN, Linhui, Shanghai, 201206 (CN); LIANG, Yuyu, Shanghai, 201206 (CN)
(74) Representative: Dehns

(57) **Abstract**

The present application provides a refrigeration system, a control method thereof and a transport vehicle including the refrigeration system. The refrigeration system comprises: a compressor (1), a first heat exchanger (3), a reservoir (4), a throttling element (5) and a second heat exchanger (6) in the refrigeration circuit. The refrigeration system comprises a cooling mode and a hot-gas bypass heating mode. In the hot-gas bypass heating mode, the refrigerant leaving the outlet (11) of the compressor (1) is delivered directly to the second heat exchanger (6) before returning to an inlet (12) of the compressor (1), wherein, the refrigeration system further comprises a branch flow path (90) with a control valve (9) provided thereon. The control valve (9) is capable of being opened or closed in the hot-gas bypass heating mode. When the control valve (9) is opened, a portion of the refrigerant leaving the outlet (11) of the compressor (1) is delivered to the reservoir (4) after passing through the branch flow path (90), such that the refrigerant stored in the reservoir (4) passes through the throttling element (5) and the second heat exchanger (6) in turn before returning to the inlet (12) of the compressor (1). When the control valve (9) is closed, the branch flow path (90) is cut off.

## Description

### FIELD OF THE INVENTION

The present invention relates to the field of refrigeration systems, in particular to a transport vehicle with a refrigeration system.

### BACKGROUND OF THE INVENTION

Transport vehicles with refrigeration systems are commonly used in cold-chain transportation, where the refrigeration systems of such vehicles usually operate in a cooling mode to preserve stored goods, such as food, medicines, and the like. However, such vehicles need to be operated in a heating mode when the ambient temperature is relatively low, e.g., -20°C, so as to keep the temperature of the goods in the container from getting too low. At this point, the solution commonly adopted is the hot-gas bypass heating mode, in which the superheated steam at the outlet of the compressor is directly bypassed to the heat exchanger in the container for heating. In order to enable the refrigerant in a reservoir located in the part of the circuit being bypassed to participate in the heating cycle, a small part of the superheated steam at the outlet of the compressor needs to be delivered to the reservoir to discharge the refrigerant remaining in the reservoir. However, this part of the refrigerant will have a cooling effect in the heat exchanger in the container, which counters part of the heating effect of the most bypassed steam, thus lowering the system efficiency.

### SUMMARY OF THE INVENTION

The object of at least the preferred embodiments of the present application is to solve or at least alleviate the problems existing in the prior art.

According to one aspect, a refrigeration system is provided, which comprises:
a compressor, a first heat exchanger, a reservoir, a throttling element and a second heat exchanger in a refrigeration circuit, wherein, in a cooling mode, refrigerant leaving the outlet of the compressor passes through, in turn, the first heat exchanger, the reservoir, the throttling element and the second heat exchanger before returning to the inlet of the compressor;
wherein, the refrigeration system comprises a hot-gas bypass heating mode, in which the refrigerant leaving the outlet of the compressor is delivered directly to the second heat exchanger before returning to the inlet of the compressor, wherein, the refrigeration system further comprises a branch flow path with a control valve provided thereon; wherein, the control valve is capable of being opened or closed in the hot-gas bypass heating mode, when the control valve is opened, a portion of the refrigerant leaving the outlet of the compressor is delivered to the reservoir after passing through the branch flow path, such that refrigerant stored in the reservoir passes through the throttling element and the second heat exchanger in turn before returning to the inlet of the compressor, and when the control valve is closed, the branch flow path is cut off.

Optionally, in the refrigeration system, the control valve is closed in the cooling mode.

Optionally, in the refrigeration system, the control valve is opened when the hot-gas bypass heating mode is started, and is closed after a first delay time.

Optionally, in the refrigeration system, the first delay time is a fixed preset value; or
the refrigeration system further comprises a sensor for monitoring the liquid level of the reservoir, wherein the first delay time is determined based on the liquid level of the reservoir; or
the refrigeration system further comprises a sensor for monitoring the temperature and/or pressure of the refrigerant at the outlet of or downstream of the reservoir, wherein the first delay time is determined based on the temperature and/or pressure of the refrigerant at the outlet of or downstream of the reservoir.

Optionally, in the refrigeration system, the refrigeration system comprises a three-way valve connected to the outlet of the compressor, wherein a first outlet of the three-way valve is connected to the first heat exchanger, a second outlet of the three-way valve is connected to the second heat exchanger, and the branch flow path extends from a flow path between the second outlet of the three-way valve and the second heat exchanger to the upper part of the reservoir.

Optionally, in the refrigeration system, the refrigeration system further comprises an sub-cooler heat exchanger, an inlet of the sub-cooler heat exchanger being connected to an liquid outlet of the reservoir, wherein the sub-cooler heat exchanger is integrated with the first heat exchanger to share the same fan;
wherein, the refrigeration system further comprises a gas-liquid heat exchanger, wherein an outlet of the sub-cooler heat exchanger is connected to a liquid flow path of the gas-liquid heat exchanger and then to the throttling element, and an outlet of the second heat exchanger is connected to a gas flow path of the gas-liquid heat exchanger.

Optionally, in the refrigeration system, the compressor is driven by a separate engine, and a suction pressure regulating valve and a gas-liquid separator are arranged upstream of the compressor.

According to another aspect, a transport vehicle with the refrigeration system according to the various embodiments is provided.

According to yet another aspect, a method for controlling a refrigeration system for use in a transport vehicle is provided, the refrigeration system being capable of operating in a cooling mode and a hot-gas bypass heating mode, wherein:
in the cooling mode, refrigerant leaving the outlet of the compressor passes through, in turn, the first heat exchanger, the reservoir, the throttling element and the second heat exchanger before returning to the inlet of the compressor;
in the hot-gas bypass heating mode, refrigerant leaving the outlet of the compressor is delivered directly to the second heat exchanger before returning to the inlet of the compressor;
the method comprising: in the hot-gas bypass heating mode, allowing a portion of the refrigerant leaving the outlet of the compressor to be delivered to the reservoir after passing through a branch flow path, such that the refrigerant stored in the reservoir passes through the throttling element and the second heat exchanger before returning to the inlet of the compressor; and
closing the control valve on the branch flow path to cut off the branch flow path after a first delay time.

Optionally, the first delay time is a fixed preset value; or
the first delay time is determined based on the liquid level of the reservoir; or
the first delay time is determined based on the temperature and/or pressure of the refrigerant at the outlet of or downstream of the reservoir.

The device and method according to the embodiments of the present invention can improve the efficiency of a refrigeration system in the hot-gas bypass heating mode.

### BRIEF DESCRIPTION OF THE DRAWINGS

With reference to the accompanying drawings, the present invention will become easier to understand. Those skilled in the art would readily appreciate that these drawings are for the purpose of illustration, and are not intended to limit the protection scope of the present invention. In addition, in the figures, similar numerals are used to denote similar components, where:
FIG 1 shows a schematic structural diagram of a refrigeration system; and
FIG 2 shows a schematic structural diagram of a refrigeration system.

### DETAILED DESCRIPTION

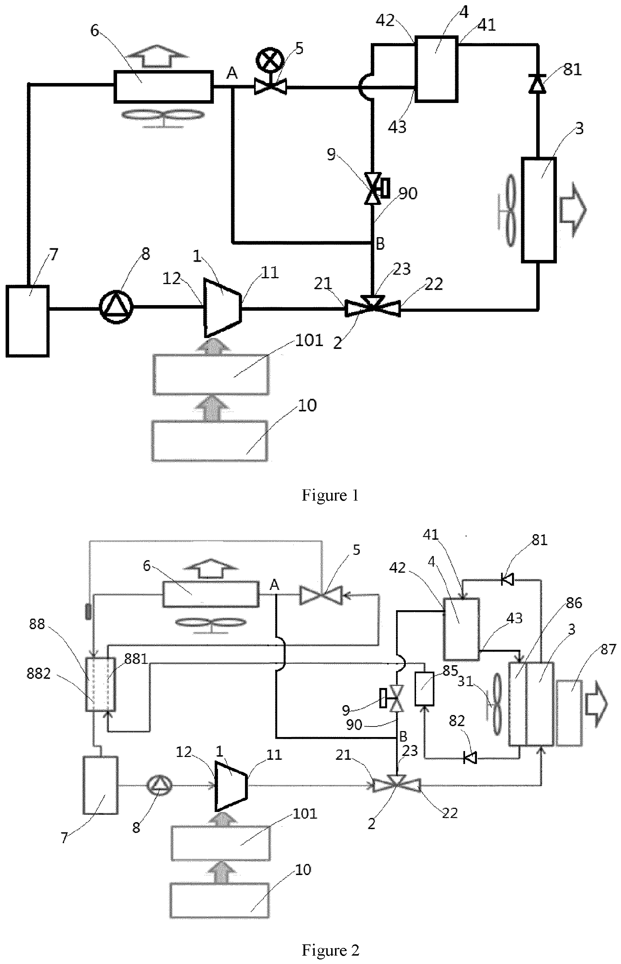

Referring first to FIG 1, a schematic structural diagram of a refrigeration system is shown. The refrigeration system comprises: a compressor 1, a first heat exchanger 3, a reservoir 4, a throttling element 5 and a second heat exchanger 6 in a refrigeration circuit. The refrigeration system can be used, for example, for transport vehicles, where the first heat exchanger 3 exchanges heat with the external environment and the second heat exchanger 6 exchanges heat with the vehicle container for cooling. When the refrigeration system is in the cooling mode, the refrigerant leaving the outlet 11 of the compressor passes through, in turn, the first heat exchanger 3, the reservoir 4, the throttling element 5 and the second heat exchanger 6 before returning to the inlet 12 of the compressor. The reservoir 4 can store part of the refrigerant, so as to meet different requirements on refrigeration amount of the system at different ambient temperatures. The refrigeration system also provides a hot-gas bypass heating mode, in which the refrigerant leaving the outlet 11 of the compressor is delivered directly to the second heat exchanger 6 to heat the goods in the container, and then returns to the inlet 12 of the compressor. In this mode, the first heat exchanger 3, the reservoir 4 and the throttling element 5 are bypassed, where refrigerant may be retained in the reservoir 4. In order to enable the refrigerant remaining in the reservoir 4 to participate in the cycle, the refrigeration system also comprises a branch flow path 90 with a control valve 9 provided thereon. In the hot-gas bypass heating mode, the control valve 9 can be opened or closed. When the control valve is opened, a portion (e.g., 2%-8%) of the refrigerant leaving the outlet 11 of the compressor passes through the branch flow path 90 and is then delivered to a second inlet 42 of the reservoir 4, causing the pressure in the reservoir 4 to increase, so that the liquid refrigerant remaining in the reservoir passes through the throttling element 5 and the second heat exchanger 6 in turn before returning to the inlet 12 of the compressor. When the control valve 9 is closed, the branch flow path 90 is cut off, at which point all the refrigerant leaving the outlet 11 of the compressor is delivered to second heat exchanger 6.

It is expected that by driving a portion (e.g., 2%-8%) of the refrigerant at the outlet of the compressor to pass through the reservoir 4, the refrigerant remaining in the reservoir 4 can be discharged. However, if the branch flow path 90 remains in operation, this portion of the refrigerant will have a cooling effect in the second heat exchanger 6, which will counter the heating function achieved by the most refrigerant that reaches the second heat exchanger 6 through bypassing, thus lowering system efficiency. Therefore, the control valve 9 can be closed after the refrigerant in the reservoir 4 has been discharged or substantially discharged, so as to avoid adverse effects on system efficiency and thus improve system efficiency. In some embodiments, the control valve 9 remains closed in the cooling mode so as to avoid reverse flow of the refrigerant. Therefore, it is not necessary to arrange a check valve on the branch flow path when the control valve 9 is arranged. Every time the hot-gas bypass heating mode is started, the control valve 9 is opened, and it is then closed after a first delay time. The first delay time can be configured according to experience, e.g., configured as a fixed preset value, such as 5 minutes, where this control strategy will be easy to operate and reliable. In other embodiments, the refrigeration system may also comprise a sensor that monitors the liquid level of the reservoir 4, where the first delay time is determined based on the liquid level of the reservoir. For example, the control valve 9 is closed after the liquid level in the reservoir 4 is below a certain value. In other embodiments, the first delay time may also be determined based on the state of the refrigerant at the fluid outlet 43 of or downstream of the reservoir 4. It should be appreciated that when liquid refrigerant is stored in the reservoir 4, the refrigerant flowing out from the fluid outlet 43 is liquid. As the refrigerant in the reservoir 4 is discharged, high-pressure steam supplied by the compressor will flow out directly from the fluid outlet 43 of the reservoir 4, at which point the control valve 9 can be closed. Therefore, in this embodiment, by means of pressure sensors and/or temperature sensors at the fluid outlet 43 of or downstream of the reservoir 4, the state of the refrigerant there can be determined, and the first delay time can then be determined. For example, superheat of the refrigerant is calculated based on the temperature and pressure at the fluid outlet 43 of or downstream of the reservoir 4, and the first delay time is determined based on the superheat of the refrigerant.

In some embodiments, the refrigeration system switches between the cooling mode and the hot-gas bypass heating mode by means of a three-way valve 2. The three-way valve 2 comprises an inlet 21 connected to the outlet 11 of the compressor, a first outlet 22 and a second outlet 23. In the cooling mode, the inlet 21 of the three-way valve 2 communicates with the first outlet 22, the first outlet 22 is further connected to the first heat exchanger 3, and the first heat exchanger 3 is connected to a first inlet 41 of the reservoir 4 via a first check valve 81, thus forming a refrigeration cycle. In the hot-gas bypass heating mode, the inlet 21 of the three-way valve 2 communicates with the second outlet 23, and the second outlet 23 of the three-way valve is connected to position A between the second heat exchanger 6 and the throttling element 5, thus bypassing the first heat exchanger 3, the reservoir 4 and the throttling element 5. A branch flow path 90 branches out from position B on the flow path between the second outlet 23 of the three-way valve and the second heat exchanger 6, and extends to a second inlet 42 of the reservoir 4 (or can be integrated with the first inlet 41). In addition, in some embodiments, the compressor 1 can be driven by a separate engine 10 via a transmission 101. The separate engine 10 can be a refrigeration system engine independent of the vehicle power engine that is arranged on the transport vehicle, capable of achieving frequency conversion of the compressor 1. A suction pressure regulating valve 8 and a gas-liquid separator 7 are also arranged upstream of the compressor 1. The gas-liquid separator 7 is used to prevent liquid refrigerant from entering the compressor. The suction pressure regulating valve 8 regulates the air inflow volume based on the compressor speed and load.

With continued reference to FIG 2, another refrigeration system is described, where the same components are denoted with the same reference numerals. In the embodiment of FIG 2, in order to improve the refrigeration efficiency of the device, the refrigeration system is also provided with a sub-cooler heat exchanger 86, whose inlet is connected to the outlet 43 of the reservoir 4, where the sub-cooler heat exchanger 86 is integrated with the first heat exchanger 3 to share the same fan unit 31. In addition, in some embodiments, a heat radiator 87 can also be integrated with the sub-cooler heat exchanger 86 and the first heat exchanger 3 to share the same fan unit 31. The heat radiator 87 can be used, for example, for heat dissipation for other components of a transport vehicle, such as an engine, i.e., the refrigerating fluid for heat dissipation of the engine is delivered to the heat radiator 87 for heat dissipation. In such an embodiment, if there is refrigerant passing through the sub-cooler heat exchanger 86 via the branch flow path 90 all the time in the hot-gas bypass heating mode, since the temperature of the refrigerant is lower than that of the refrigerating fluid in the heat radiator 87, this will result in excessive heat dissipation of the refrigerating fluid flowing in the heat radiator 87, where excessively low temperature will lead to increased viscosity of the refrigerating fluid, thereby impeding the heat dissipation of the engine. Closing the control valve 9 on the branch flow path 90, however, can further prevent this situation from happening. Furthermore, in order to improve the refrigeration efficiency of the device, the refrigeration system further comprises a gas-liquid heat exchanger 88. The outlet of the sub-cooler heat exchanger is connected to the liquid flow path 881 of the gas-liquid heat exchanger 88, and then to the throttling element 5. The outlet of the second heat exchanger 6 is connected to the gas flow path 882 of the gas-liquid heat exchanger 88.

Therefore, in the embodiment of FIG 2, in the cooling mode, the refrigerant leaving the outlet 11 of the compressor passes through, in turn, the first heat exchanger 3, the first check valve 81, the reservoir 4, the sub-cooler heat exchanger 86, a second check valve 82, a filter 85, the liquid flow path 881 of the gas-liquid heat exchanger 88, the throttling element 5 (thermal expansion valve or electronic expansion valve), the second heat exchanger 6, the gas flow path 882 of the gas-liquid heat exchanger 88, the gas-liquid separator 7, and the suction pressure regulating valve 8 before returning to the inlet 12 of the compressor. In the hot-gas bypass heating mode, if the control valve 9 is closed, the refrigerant leaving the outlet 11 of the compressor will pass through, in turn, the three-way valve 2, point B in the figure, point A in the figure, the second heat exchanger 6, the gas flow path 882 of the gas-liquid heat exchanger 88, the gas-liquid separator 7, and the suction pressure regulating valve 8 before returning to the inlet 12 of the compressor. If the control valve 9 is opened, a portion of the refrigerant (e.g., 2% - 8% of the refrigerant) will pass through the control valve 9, the reservoir 4, the sub-cooler heat exchanger 86, the second check valve 82, the filter 85, the liquid flow path 881 of the gas-liquid heat exchanger 88, the throttling element 5 (thermal expansion valve or electronic expansion valve), the second heat exchanger 6, the gas flow path 882 of the gas-liquid heat exchanger 88, the gas-liquid separator 7, and the suction pressure regulating valve 8 before returning to the inlet 12 of the compressor. The control mode of the control valve 9 may be performed in the manner described in FIG 1.

A transport vehicle with the refrigeration system is also provided.

A method of controlling the various refrigeration systems is provided, the method comprising: in the hot-gas bypass heating mode, allowing a portion of the refrigerant leaving the outlet of the compressor to be delivered to the reservoir after passing through a branch flow path, such that the refrigerant stored in the reservoir passes through the throttling element and the second heat exchanger before returning to the inlet of the compressor; and closing the control valve on the branch flow path to cut off the branch flow path after a first delay time. In some embodiments, the first delay time is a fixed preset value, or the first delay time is determined based on the liquid level of the reservoir or on the temperature and/or pressure of the refrigerant at the outlet of or downstream of the reservoir.

The specific embodiments described above are merely intended to describe the principles of the present invention more clearly, wherein various components are clearly shown or described to facilitate the understanding of the principles of the present invention. Those skilled in the art may, without departing from the scope of the present invention defined by the following claims, make various modifications or changes to the specific embodiments. Therefore, it should be understood that the scope of patent protection of the present invention is defined only by the following claims.

## Claims

1. A refrigeration system, comprising:
a compressor (1), a first heat exchanger (3), a reservoir (4), a throttling element (5) and a second heat exchanger (6) in a refrigeration circuit,
wherein, in a cooling mode, refrigerant leaving an outlet (11) of the compressor (1) passes through, in turn, the first heat exchanger (3), the reservoir (4), the throttling element (5) and the second heat exchanger (6) before returning to an inlet (12) of the compressor (1);
wherein, the refrigeration system comprises a hot-gas bypass heating mode, in which the refrigerant leaving the outlet (11) of the compressor (1) is delivered directly to the second heat exchanger (6) before returning to the inlet (12) of the compressor (1),
wherein, the refrigeration system further comprises a branch flow path (90) with a control valve (9) provided thereon;
wherein, the control valve (9) is capable of being opened or closed in the hot-gas bypass heating mode, where when the control valve (9) is opened, a portion of the refrigerant leaving the outlet (11) of the compressor (1) is delivered to the reservoir (4) after passing through the branch flow path (90), such that refrigerant stored in the reservoir (4) passes through the throttling element (5) and the second heat exchanger (6) in turn before returning to the inlet (12) of the compressor (1), and when the control valve (9) is closed, the branch flow path (90) is cut off.

2. The refrigeration system according to claim 1, wherein the control valve (9) is closed in the cooling mode.

3. The refrigeration system according to claim 1 or 2, wherein the control valve (9) is opened when the hot-gas bypass heating mode is started, and is closed after a first delay time.

4. The refrigeration system according to claim 3, wherein the first delay time is a fixed preset value.

5. The refrigeration system according to claim 3, wherein the refrigeration system further comprises a sensor for monitoring a liquid level of the reservoir (4), and wherein the first delay time is determined based on the liquid level of the reservoir (4).

6. The refrigeration system according to claim 3, wherein the refrigeration system further comprises a sensor for monitoring a temperature and/or pressure of the refrigerant at an outlet (34) of or downstream of the reservoir (4), wherein the first delay time is determined based on the temperature and/or pressure of the refrigerant at the outlet (34) of or downstream of the reservoir (4).

7. The refrigeration system according to any of claims 1 to 6, wherein the refrigeration system comprises a three-way valve (2) connected to the outlet (11) of the compressor (1), a first outlet (22) of the three-way valve (2) is connected to the first heat exchanger (3), a second outlet (23) of the three-way valve (2) is connected to the second heat exchanger (6), and the branch flow path (90) extends from a flow path between the second outlet (23) of the three-way valve and the second heat exchanger (6) to the reservoir (4).

8. The refrigeration system according to any of claims 1 to 7, wherein the refrigeration system further comprises:
a sub-cooler heat exchanger (86), an inlet of the sub-cooler heat exchanger being connected to the outlet (43) of the reservoir (4), wherein the sub-cooler heat exchanger (86) is integrated with the first heat exchanger (3) to share the same fan (31); and
a gas-liquid heat exchanger (88), wherein an outlet of the sub-cooler heat exchanger is connected to a liquid flow path (881) of the gas-liquid heat exchanger (88) and then to the throttling element (5), and an outlet of the second heat exchanger (3) is connected to a gas flow path (882) of the gas-liquid heat exchanger (88).

9. The refrigeration system according to any of claims 1 to 8, wherein the compressor (1) is driven by a separate engine, and a suction pressure regulating valve and a gas-liquid separator are arranged upstream of the compressor (1).

10. A transport vehicle comprising the refrigeration system according to any of claims 1 to 9.

11. A method for controlling a refrigeration system for use in a transport vehicle, the refrigeration system being capable of operating in a cooling mode and a hot-gas bypass heating mode, wherein:
in the cooling mode, refrigerant leaving an outlet (11) of a compressor (1) passes through, in turn, a first heat exchanger (3), a reservoir (4), a throttling element (5) and a second heat exchanger (6) before returning to an inlet (12) of the compressor (1);
in the hot-gas bypass heating mode, refrigerant leaving the outlet (11) of the compressor (1) is delivered directly to the second heat exchanger (6) before returning to the inlet (12) of the compressor (1);
the method comprising: in the hot-gas bypass heating mode, allowing a portion of the refrigerant leaving the outlet (11) of the compressor (1) to be delivered to the reservoir (4) after passing through a branch flow path (90), such that refrigerant stored in the reservoir (4) passes through the throttling element (5) and the second heat exchanger (6) before returning to the inlet (12) of the compressor (1); and
closing a control valve (9) on the branch flow path (90) to cut off the branch flow path (90) after a first delay time.

12. The method according to claim 11, wherein the first delay time is a fixed preset value.

13. The method according to claim 11, wherein the first delay time is determined based on a liquid level of the reservoir (4).

14. The method according to claim 11, wherein the first delay time is determined based on a temperature and/or pressure of refrigerant at an outlet (34) of or downstream of the reservoir (4).
